# EUROPEAN PATENT APPLICATION

(11) **EP 1 767 299 A1**
(43) Date of publication of application: **28.03.2007**
(21) Application number: 05021082.2
(22) Date of filing: 27.09.2005
(51) Int. Cl.: B23D 59/00, B23D 45/16

(54) **Observation window for portable circular saws**

(71) Applicant: Motomax Electric Co., Ltd., Taiping City, Taichung Hsien (TW); Evolution Power Tools Limited, Holbrook Industrial Estate Sheffield S20 3GH (GB)
(72) Inventor: Lin, Chou-Jenq, Tali City Taichung Hsien (TW)
(74) Representative: Viering, Jentschura & Partner

(57) **Abstract**

An observation device (40) for a portable circular saw includes a recess (13) defined in the base and located at a position corresponding to a periphery of the circular blade. An observation device includes a transparent member which is connected to the base and covers the recess. The user can see the position that the periphery of the circular blade cuts the object via the observation device.

## Description

### FIELD OF THE INVENTION

The present invention relates to an observation device connected to the base of a circular saw and the user can see the circular blade and the object via the observation device.

### BACKGROUND OF THE INVENTION

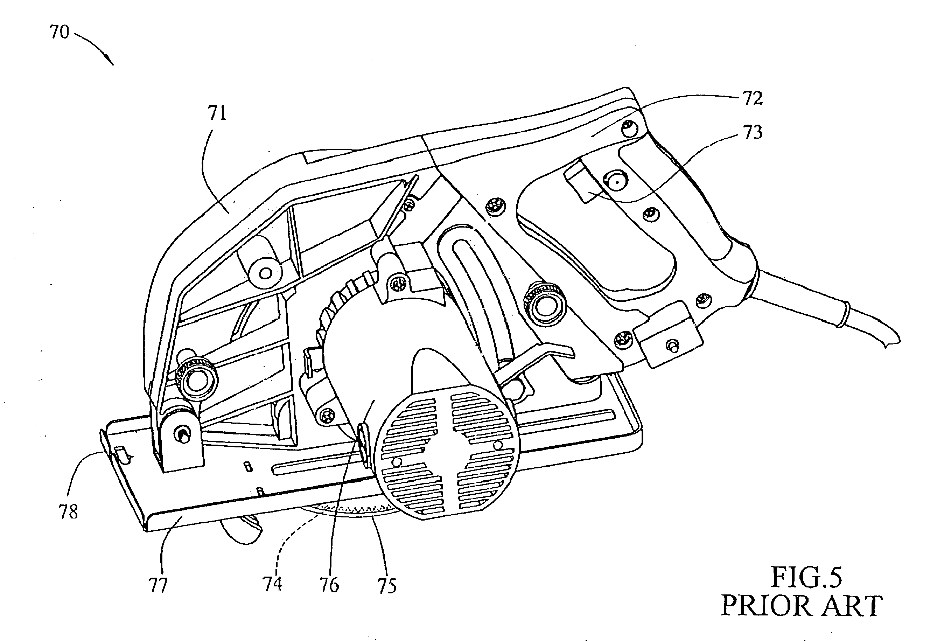

A conventional portable circular saw 70 is shown in Fig. 5 and generally includes a base 71 with a motor 76 connected thereto and a circular blade 74 driven by the motor 76 is partially extends from an underside of the circular saw 70 so as to cut an object A handle 72 is connected to a top of the base 71 and includes a trigger 73 such that when the user pulls the trigger 73, the motor 76 is activated to drive the circular blade 74. A pivotable cover 75 is pivotably connected to the base 71 to protect the user from being cut the circular blade 74. A press board 77 is pivotably connected to the underside of the base 71 so as to press and position the object to be cut. The press board 77 includes a mark 78 on a front end of the press board 77 so that the user may check the relative position between the circular blade 74 and the object. However, the mark 78 is located at a distance from the circular blade 74 so that the user can only feels the vibration to acknowledge when the circular blade 74 is in contact with the object. Because the circular blade 74 is operated at high speed so that when the circular blade 74 begins to contact the object, and the user does not know the precise timing of the contact, the circular blade 74 could jump slightly and cannot cut the object at desired position.

The present invention intends to provide an observation device for a portable circular saw, wherein the observation device allows the user to see the periphery of the circular blade and the object so that the user is able to control the circular blade precisely to cut the object as desired.

### SUMMARY OF THE INVENTION

The present invention relates to a portable circular saw that comprises a base with a blade unit and a motor which drives a circular blade of the blade unit. A handle with a trigger are connected to the base and a press board is connected to an underside of the base. A recess is defined in the base and located at a position corresponding to a periphery of the circular blade. An observation device includes a transparent member which is connected to the base and covers the recess.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the portable circular saw of the present invention;
Fig. 2 is an exploded view to the transparent member of the observation device and the portable circular saw of the present invention;
Fig. 3 is a side view to show the portable circular saw of the present invention;
Fig. 4 shows that the press board is adjusted away from the portable circular saw of the present invention, and
Fig. 5 shows a conventional portable circular saw of the present invention.

### DETAILED DESCRIPTION OF THE PREFERRED EMBODIMENT

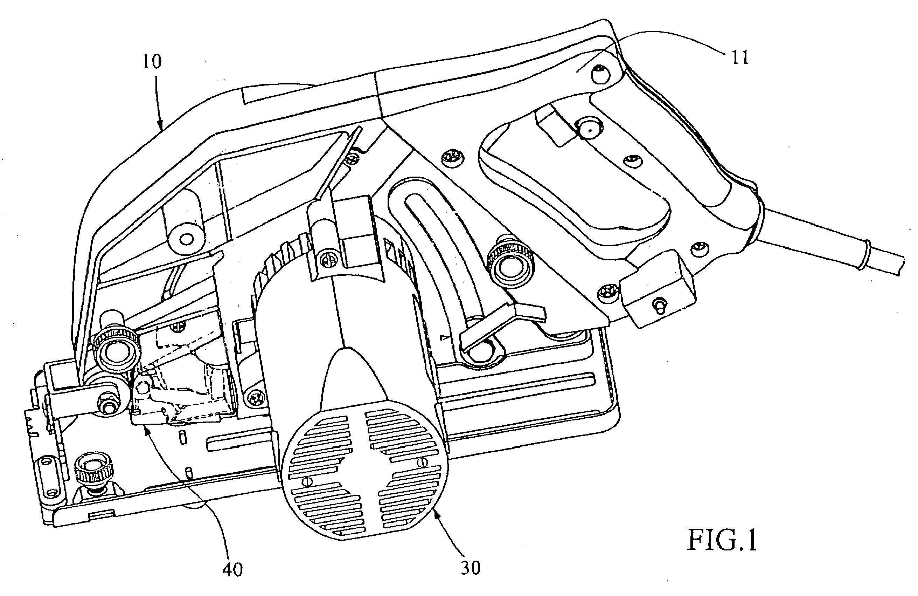

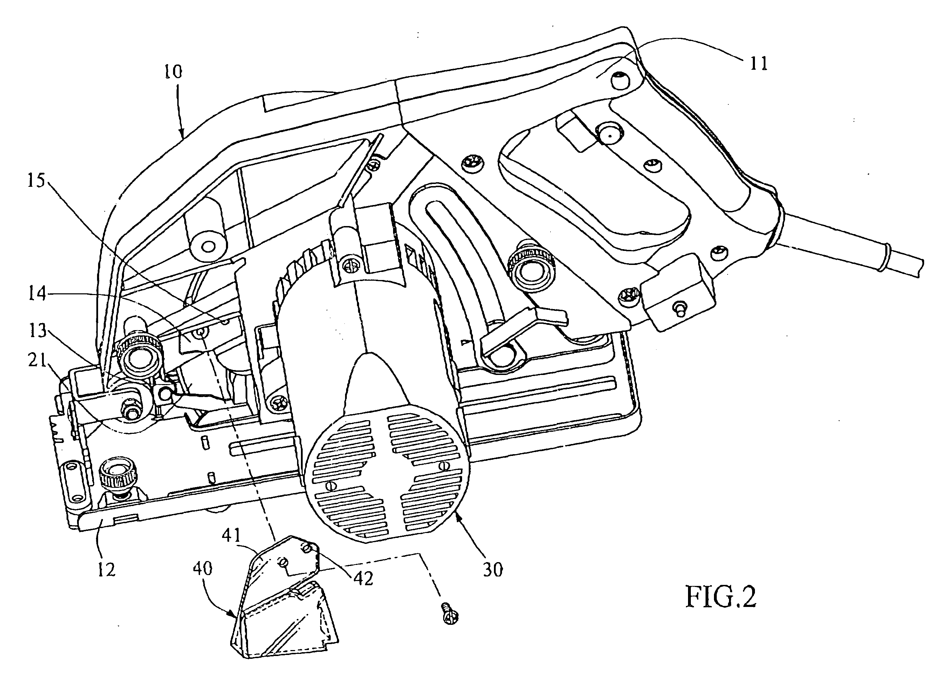

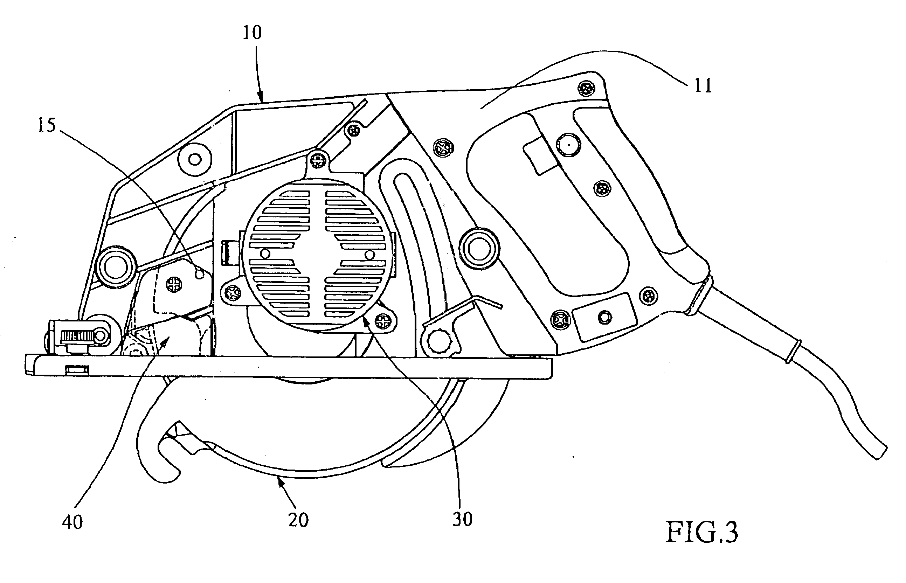

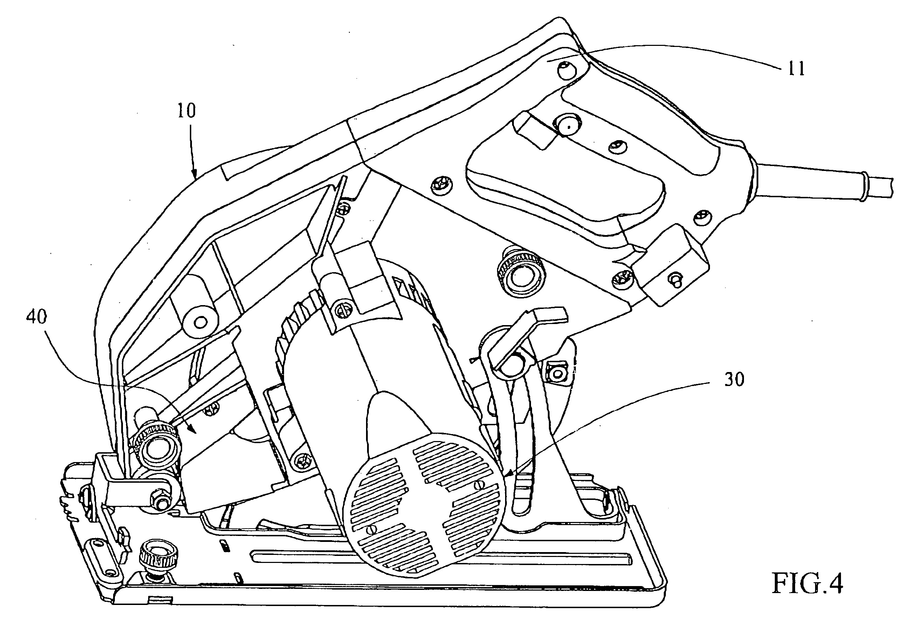

Referring to Figs. 1 to 3, the portable circular saw of the present invention comprises a base 10, a blade unit 20 and a motor 30 connected to the base 10, and an observation device 40. The blade unit 20 includes a circular blade 21 which is driven by the motor 30. A handle 11 is connected to the base 10 and has a trigger which is pulled to activate the motor 30. A press board 12 is pivotably connected to an underside of the base 10 and is able to pivoted about a guide plate to a desired angle as disclosed in Fig. 4. A recess 13 is defined in a side of the base 10 and located at a position corresponding to a periphery of the circular blade 21.

The observation device 40 includes a transparent member which is connected to the base 10 and covers the recess 13. A connection plate 14 is connected to a periphery of defining the recess 13 and a positioning tube 15 extends from the connection plate 14. The transparent member of the observation device 40 includes a connection end 41 which includes two holes 42 and a bolt extends through one of the holes 42 and is connected to a tubular part on the base 10 and the positioning tube 15 extends through the other hole 42 so that the observation device 40 does not rotate on the base 10.

When using the portable circular saw, the user can see the circular blade 21 and the object to be cut so that he or she can move the portable circular saw to let the circular blade 21 cut the object at desired position. The transparent member also prevents the debris from flying out to hurt the user's eyes.

While we have shown and described the embodiment in accordance with the present invention, it should be clear to those skilled in the art that further embodiments may be made without departing from the scope of the present invention.

## Claims

1. A portable circular saw comprising:
a base having a blade unit and a motor which drives a circular blade of the blade unit, a handle with a trigger connected to the base and a press board connected to an underside of the base, a recess defined in the base and located at a position corresponding to a periphery of the circular blade, and
an observation device including a transparent member which is connected to the base and covering the recess.

2. The device as claimed in claim 1, wherein a connection plate is connected to a periphery of defining the recess and a positioning tube extends from the connection plate, the transparent member of the observation device includes a connection end which includes two holes, a bolt extends through one of the holes and is connected to the base and the other positioning tube extends through the other hole.

3. The device as claimed in claim 1, wherein the recess is defined in a side of the base.
